Europäisches Patentamt

European Patent Office

Office européen des brevets

(19)

(11) Numéro de publication: **0 249 529**

**B1**

(12) **FASCICULE DE BREVET EUROPEEN**

(45) Date de publication du fascicule du brevet: 20.06.90

(21) Numéro de dépôt: 87401222.2

(22) Date de dépôt: 02.06.87

(51) Int. Cl.⁵: **B 60 K 17/28,** B 60 K 25/06, B 60 K 41/10

(54) Dispositif de transmission pour véhicule de lutte contre l'incendie.

(30) Priorité: 06.06.86 FR 8608171

(43) Date de publication de la demande:
16.12.87 Bulletin 87/51

(45) Mention de la délivrance du brevet:
20.06.90 Bulletin 90/25

(84) Etats contractants désignés:
AT BE CH DE ES GB IT LI NL

(56) Documents cités:
AT-A- 367 304
FR-A-2 537 932
GB-A- 972 618
GB-A-1 468 348
GB-A-2 068 512
US-A-3 605 962
US-A-3 889 828
US-A-4 191 270

(73) Titulaire: CAMIVA
Boite Postale 16
F-73230 Saint-Alban-Leysse (FR)

(72) Inventeur: Artaud, Claude
99 rue J. Denarié
F-73190 Challes les Eaux (FR)
Inventeur: Veillard, Jean-François
1497 Boulevard du Lac
F-73370 Le Bourget du Lac (FR)

(74) Mandataire: Chassagnon, Jean Alain
8/10, avenue Emile Zola
F-92109 Boulogne-Billancourt (FR)

Courier Press, Leamington Spa, England.

EP 0 249 529 B1

## Description

La présente invention est relative à un système de transmission pour véhicule de lutte contre l'incendie et plus particulièrement à un véhicule devant à la fois se déplacer et propulser les agents extincteurs tel que par exemple les véhicules de lutte contre les feux d'avion.

On connaît des véhicules dotés de deux moteurs à combustion interne, un pour le déplacement du véhicule et un pour l'entraînement de la pompe centrifuge de propulsion des agents extincteurs.

Ces systèmes présentent les inconvénients de coût, poids, maintenance et fiabilité liés à la présence des deux moteurs à combustion interne.

On connaît également des véhicules tels que ceux décrits dans FR—A—2448995; dans ce cas, la pompe centrifuge est entraînée par le moteur de traction du véhicule à l'aide d'une transmission mécanique, l'avancement du véhicule étant assuré, pendant le fonctionnement de la pompe centrifuge, par une transmission hydrostatique.

Ce système présente l'inconvénient d'une possibilité réduite de réglage de la puissance de traction et de la vitesse d'avancement, et de la nécessité d'arrêter le véhicule pour mettre en fonction le dispositif de transmission de la pompe centrifuge.

Le but de la présente invention est de proposer un dispositif qui permette d'avoir deux types de transmission avec un seul moteur à combustion interne de façon à pouvoir enclencher la deuxième transmission sans avoir à arrêter la première transmission.

Selon un mode de réalisation de l'invention le dispositif de transmission, pour véhicule de lutte contre l'incendie, comprend un châssis sur roue sur lequel est monté un moteur à combustion interne entraînant au moins certaines roues par l'intermédiaire d'une boîte de vitesses semi-automatique ou automatique avec un convertisseur de couple sur laquelle sont montés les transmissions à cardans d'entraînement des roues. La boîte de vitesses dispose d'un plateau de prise de mouvement entraînant un dispositif hydrostatique accouplé à la pompe centrifuge de l'équipement de lutte contre l'incendie. Le dispositif selon l'invention comporte un système provoquant l'augmentation du régime de ralenti du moteur à combustion interne jusqu'à un régime pré-défini, ledit système étant associé à un dispositif de régulation du glissement de la boîte de vitesses qui agit sur le frein de la première et de la deuxième vitesse, de telle sorte qu'à la mise en service de l'équipement de lutte contre l'incendie le réglage de la vitesse d'avancement du véhicule n'influe pas sur le fonctionnement de la pompe centrifuge.

Selon un mode de réalisation de l'invention, le dispositif hydrostatique comporte une pompe à débit variable qui alimente un moteur hydraulique, ledit dispositif hydrostatique ayant des moyens de régulation.

Selon un mode de réalisation de l'invention, la mise en service de l'équipement de lutte contre l'incendie s'effectue par un interrupteur qui permet l'alimentation du système provoquant l'augmentation du régime de ralenti et des moyens de régulation hydrostatique.

Selon un mode de réalisation de l'invention, le système provoquant l'augmentation du régime de ralenti consiste en un actionneur, qui agit sur le levier de commande d'accélération.

Selon un mode de réalisation de l'invention, le dispositif de régulation de glissement de la boîte de vitesses comporte une pédale de modulation, qui commande en distributeur qui agit sur l'alimentation du frein de la première et de la deuxième vitesse.

Selon un mode de réalisation de l'invention, les moyens de régulation consistent en un boîtier électronique qui reçoit une information vitesse de rotation de la pompe centrifuge par l'intermédiaire d'un capteur, et un signal représentatif de l'organe de commande; ledit boîtier électronique va générer un ordre de correction de la cylindrée de la pompe hydraulique à partir de la différence entre les signaux issus du capteur et l'organe de commande.

Selon un mode de réalisation de l'invention, les moyens de régulation consistent en un boîtier électronique qui reçoit une information pression de refoulement de la pompe centrifuge par l'intermédiaire d'un capteur, et un signal représentatif de l'organe de commande, ledit boîtier électronique va générer un ordre de correction de la cylindrée de la pompe à partir de la différence entre les signaux issues du capteur et l'organe de commande.

Selon un mode de réalisation de l'invention, les moyens de régulation consistent en un régulateur de débit monté sur le refoulement de la pompe, et un électrodistributeur qui établit l'action dudit régulateur de débit sur le compensateur de cylindrée de la pompe.

La présente invention présente ainsi l'avantage d'associer à un seul moteur à combustion interne, deux types de transmission possédant chacun des rapports de transmission continûment variables. Ainsi la transmission de puissance entre le moteur et les roues est assurée par un convertisseur de couple et une boîte de vitesse semi-automatique ou automatique à plusieurs rapports, à trains d'engrenages épicycloïdaux associés à un système de modulation permettant une modification continue des rapports de transmission en provoquant le glissement des embrayages d'immobilisation des trains épicycloïdaux. La transmission de puissance entre le moteur et la pompe centrifuge de propulsion de l'agent extincteur est assurée par une transmission hydrostatique à partir de la prise de mouvement, cette transmission étant à rapport de vitesse variable grâce aux variations de cylindrée des organes pompe et moteur hydraulique. Un système automatique de régulation du fonctionnement de cette transmission assure la conversation d'un des paramètres de fonctionnement de la pompe centrifuge choisi, tels que par exemple la vitesse de rotation, la pression de refoulement ou le débit.

D'autres caractéristiques et avantages de la présente invention ressortiront de la description qui suit le mode de réalisation donné à titre d'exemple en référence aux dessins annexés sur lesquels:

—La figure 1 représente la chaîne cinématique d'un véhicule de lutte contre l'incendie assurant la transmission de puissance entre le moteur et les roues du véhicule.

—La figure 2 représente le schéma de principe de la boîte de vitesse—boîte de transfert.

—La figure 3 représente le schéma du système de modulation permettant le glissement de la transmission.

—La figure 4 représente le schéma de principe de la transmission hydrostatique de puissance entre le moteur du véhicule et la pompe centrifuge.

—La figure 5 représente une variante du schéma de principe de la transmission hydrostatique de puissance entre le moteur du véhicule et la pompe centrifuge.

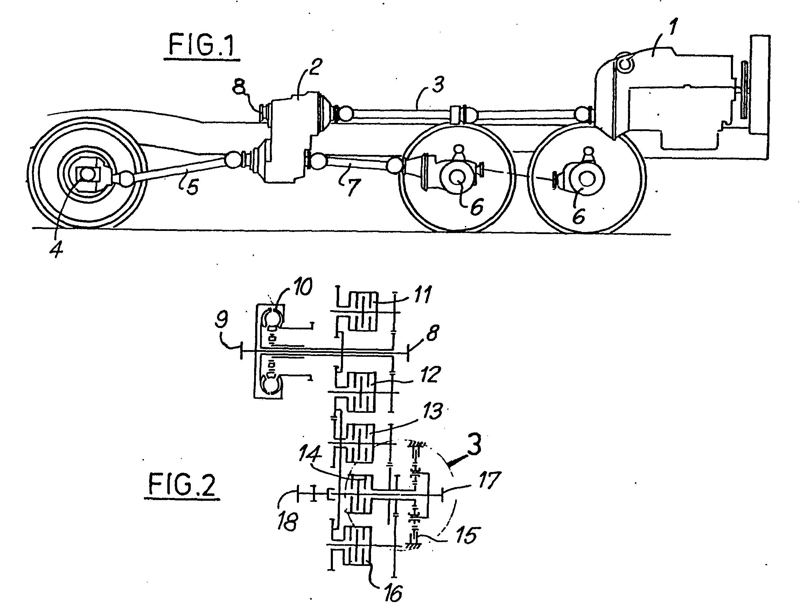

La figure 1 représente la chaîne cinématique de transmission de puissance entre le moteur et les roues d'un véhicule de lutte contre l'incendie.

Le moteur 1 est accouplé à une boîte de vitesse—boîte de transfert 2 par l'intermédiaire d'une transmission à cardans 3.

La boîte de vitesse 2 étant elle-même accouplée au pont avant 4 par une transmission à cardans 5 et aux ponts arrières 6 par une transmission à cardans 7.

Un plateau de prise de mouvement 8 permet l'entraînement simultané de la pompe à huile de la transmission hydrostatique.

La figure 2 représente en coupe le schéma de principe de la boîte de vitesse—boîte de transfert.

La transmission à cardans venant du moteur est accouplée avec le plateau 9 solidaire d'une des parties de l'impulseur du convertisseur de couple 10 et du plateau de prise de mouvement 8.

Les embrayages 11 et 12 permettent l'inversion du sens de déplacement du véhicule. La première vitesse est obtenue par fermeture de l'embrayage 13 et du frein 15. La deuxième vitesse est obtenue par fermeture de l'embrayage 16 et du frein 15. La troisième vitesse est obtenue par fermeture de l'embrayage 13 et de l'embrayage 14. La quatrième vitesse est obtenue par fermeture de l'embrayage 14 et de l'embrayage 16. La sortie de puissance vers le pont avant 4 s'effectue par le plateau 17 et la sortie de puissance vers le pont arrière 6 s'effectue par le plateau 18.

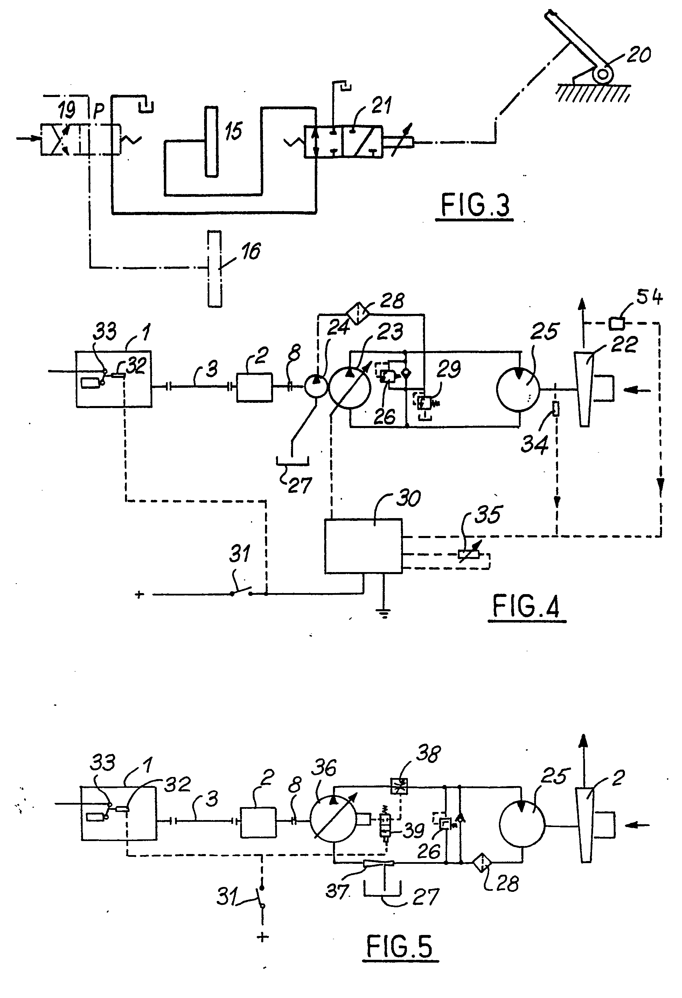

La figure 3 représente le schéma de fonctionnement du système de modulation permettant de régler le glissement du frein 15 de 1ère et 2ème vitesse. Lorsque le sélecteur de vitesse est en positon 1ère ou 2ème vitesse, le distributeur 19 est activé et la pression d'huile est envoyée sur le frein 15 de 1ère et 2ème par l'intermédiaire du distributeur 21 ce qui a pour effet de bloquer le frein 15.

L'action progressive sur la pédale de modulation 20 va commander l'ouverture progressive du distributeur 21, laquelle va entraîner la diminution progressive de la pression dans le frein 15 et donc son glissement. Il en résulte une diminution progressive de la vitesse de rotation des plateaux 17 et 18.

La figure 4 représente le schéma du système de transmission de puissance entre le moteur à combustion interne du véhicule 1 et la pompe centrifuge 22 de l'équipement de lutte contre l'incendie.

Au plateau de la prise de mouvement 8 de la boîte de vitesse 2 sont accouplées deux pompes hydrauliques de type connu: une pompe 23 qui est la pompe principale à cylindrée variable 23 et une pompe de gavage 24.

La pompe principale 23 est montée en circuit fermé avec un moteur hydraulique 25. Un limiteur de pression 26 évite tout risque de surpression au refoulement de la pompe principale 23.

La pompe de gavage 24, puise l'huile dans le réservoir 27 et refoule dans le circuit de retour du moteur hydraulique à travers un filtre à huile 28; un limiteur de pression 29 assure la limitation de la pression du circuit de retour et de gavage moteur hydraulique 25 entraîne la pompe centrifuge 22 de l'équipement incendie.

Un boîtier électronique 30 de type connu va assurer le contrôle du système de variation de débit de la pompe principale 23.

La mise en service du système d'entraînement de la pompe centrifuge s'effectue par fermeture de l'interrupteur 31, laquelle provoque l'alimentation électrique du boîtier électronique 30 et l'alimentation électronique de l'actionneur 32.

L'actionneur 32 de type connu tel que par exemple actionneur électromagnétique, de par son changement d'état va limiter le déplacement du levier de commande d'accélération 33 du moteur 1 de façon à obtenir un régime minimal du moteur 1, appelé ralenti accéléré, correspondant à la puissance nécessaire à l'entraînement de la pompe centrifuge 22.

Le boîtier électronique 30 reçoit par l'intermédiaire du capteur 24 un signal représentatif de la vitesse de rotation de la pompe centrifuge 22.

Un organe de commande 35, par exemple du type potentiométrique, délivre au boîtier électronique 30 un signal représentatif de la demande de l'opérateur, qui est une pression qui correspond à une vitesse de la pompe centrifuge 22.

A partir de la différence entre les signaux issus du capteur 34 et de l'organe de commande 35, le boîtier électronique 30 va générer un ordre de correction de la cylindrée de la pompe hydraulique principale 23; il en résulte une modification du débit d'huile, donc de la vitesse de rotation du moteur hydraulique 25 et de la pompe centrifuge 22.

Le système atteindra son équilibre lorsque le signal issu du capteur 34 correspondra à celui issu de l'organe de commande 35.

Ce système de régulation assure un fonctionnement à régime constant de la pompe centrifuge 22 de l'équipement incendie quelle que soit la variation du régime de rotation du moteur à combustion interne 1, entre le régime de ralenti accéléré et le régime maximal permis.

Ainsi, pendant l'entraînement de la pompe centrifuge 22 à régime constant, l'opérateur pourra régler la vitesse d'avancement de son véhicule en utilisant la pédale de modulation 20 (figure 3) pour ralentir, ou le levier de commande d'accélération 33 pour augmenter la vitesse.

A l'ouverture de l'interrupteur 31 la pompe principale 23 passe automatiquement à débit nul ce qui provoque l'arrêt de la pompe centrifuge 22.

En variante et sans sortir du cadre de l'invention, le capteur de vitesse 34 peut être remplacé par un capteur de pression 54 monté au refoulement de la pompe centrifuge 22; dans ce cas c'est la pression de refoulement de la pompe centrifuge 22 qui sera maintenue constante.

La figure 5 représente une variante du système de transmission hydrostatique de la pompe centrifuge 22.

Le moteur à combustion interne 1 entraîne par l'intermédiaire de la boîte de vitesse 2 et du plateau de prise de mouvement 8 une pompe hydraulique à cylindrée variable 36 reliée à un moteur hydraulique 25 par l'intermédiaire d'un circuit du type semi-ouvert.

L'huile refoulée par la pompe 36 traverse un régulateur de débit 38, puis le moteur hydraulique 25.

Sur le circuit de retour sont montés un filtre à huile 28 et un système à venturi 37 permettant d'aspirer dans le réservoir 27 un débit d'huile additionnel destiné à compenser les fuites internes des différents organes.

Un limiter de pression 26 évite tout risque de surpression au refoulement de la pompe 36.

La mise en service s'effectue comme précédemment par action sur l'interrupteur 31 lequel provoque le passage du moteur 1 en régime de ralenti accéléré et le changement d'état de l'électrodistributeur 39 lequel établit l'action du régulateur de débit 38 sur le compensateur de cylindrée de la pompe 36 de telle sorte que le débit corresponde à la valeur préréglée du régulateur de débit 38.

Ce système assurant un débit d'huile de la pompe hydraulique 36, constant; le régime de rotation du moteur hydraulique 25 et de la pompe centrifuge 22 sera maintenu constant.

## Revendications

1. Dispositif de transmission, pour véhicule de lutte contre l'incendie, comprenant un châssis sur roue sur lequel est monté un moteur (1) à combustion interne entraînant au moins certaines roues par l'intermédiaire d'une boîte de vitesses (2) semi-automatique ou automatique avec un convertisseur de couple (10) sur laquelle sont montés les transmissions à cardans (5) et (7) d'entraînement des roues, ladite boîte de vitesses (2) disposant d'un plateau de prise de mouvement (8), caractérisé en ce que ledit plateau de prise de mouvement (8) entraîne un dispositif hydrostatique accouplé à la pompe centrifuge (22) de l'équipement de lutte contre l'incendie, et que le dispositif comporte un système provoquant l'augmentation du régime de ralenti du moteur (1) à combustion interne jusqu'à un régime pré-défini, ledit système étant associé à un dispositif de régulation du glissement de la boîte de vitesses (2), qui agit sur le frein (15) de la première et de la deuxième vitesse, le dispositif hydrostatique comportant une pompe (23, 26) à débit variable qui alimente un moteur hydraulique (25), ledit dispositif hydrostatique ayant des moyens de régulation, de telle sorte qu'à la mise en service de l'équipement de lutte contre l'incendie le réglage de la vitesse d'avancement du véhicule n'influe pas sur le fonctionnement de la pompe centrifuge (22).

2. Dispositif de transmission selon la revendication 1, caractérisé en ce que la mise en service de l'équipement de lutte contre l'incendie s'effectue par un interrupteur (31) qui permet l'alimentation du système provoquant l'augmentation du régime de ralenti et des moyens de régulation du dispositif hydrostatique.

3. Dispositif de transmission selon la revendication 1, caractérisé en ce que le système provoquant l'augmentation du régime de ralenti consiste en un actionneur (32), qui agit sur le levier de commande d'accélération (33).

4. Dispositif de transmission selon la revendication 1, caractérisé en ce que le dispositif de régulation de glissement de la boîte de vitesses (2) comporte une pédale de modulation (20), qui commande un distributeur (21) qui agit sur l'alimentation du frein (15) de la première et de la deuxième vitesse.

5. Dispositif de transmission selon la revendication 1, caractérisé en ce que les moyens de régulation consistent en un boîtier électronique (30) qui reçoit une information vitesse de rotation de la pompe centrifuge (22) par l'intermédiaire d'un capteur (34), et un signal représentatif de l'organe de commande (35); ledit boîtier électronique (30) va générer un ordre de correction de la cylindrée de la pompe (23) à partir de la différence entre les signaux issus du capteur (34) et l'organe de commande (35).

6. Dispositif de transmission selon la revendication 1, caractérisé en ce que les moyens de régulation consistent en un boîtier électronique (30) qui reçoit une information pression de refoulement de la pompe centrifuge (22) par l'intermédiaire d'un capteur (54), et un signal représentatif de l'organe de commande (35); ledit boîtier électronique (30) va générer un ordre de correction de la cylindrée de la pompe (23) à partir de la différence entre les signaux issus du capteur (54) et l'organe de commande (35).

7. Dispositif de transmission selon la revendication 1, caractérisé en ce que les moyens de régulation consistent en un régulateur de débit (38) monté sur le refoulement de la pompe (36), et un électrodistributeur (39) qui établit l'action dudit régulateur de débit (38) sur le compensateur de cylindrée de la pompe (36).

**Patentansprüche**

1. Kraftübertragungseinrichtung für ein Brandbekämpfungsfahrzeug, mit einem mit Rädern versehenen Fahrgestell, das mit einer Brennkraftmaschine (1) versehen ist zum Antrieb wenigstens einiger Räder über ein halbautomatisches oder automatisches Getriebe (2) mit Drehmomentwandler (10) und an dem Kardanwellen (5 und 7) zum Antrieb der Räder angeordnet sind, wobei das Getriebe (2) mit einer Abtriebsscheibe (8) versehen ist, dadurch gekennzeichnet, daß die Abtriebsscheibe (8) eine hydrostatische Anordnung antreibt, die mit der Zentrifugalpumpe (22) der Brandbekämpfungseinrichtung verbunden ist, daß die Einrichtung eine Anordnung aufweist, die eine Erhöhung des Leerlaufs der Brennkraftmaschine (1) bewirkt bis zu einer vorgegebenen Drehzahl, wobei die Anordnung mit einer Regelanordnung für die Steuerung des Gleitens des Getriebes verbunden ist, die auf die Bremse (15) des ersten und des zweiten Ganges einwirkt, daß die hydrostatische Anordnung eine Pumpe (23, 26) variabler Leistung aufweist, die einen hydraulischen Motor (25) beaufschlagt und daß die hydrostatische Anordnung eine Steuereinrichtung aufweist, so daß beim Einsatz der Brandbekämpfungsvorrichtung die Steuerung der Vorwärtsgeschwindigkeit des Fahrzeugs den Betrieb der Zentrifugalpumpe (22) nicht beeinflußt.

2. Kraftübertragungseinrichtung nach Anspruch 1, dadurch gekennzeichnet, daß der Einsatz der Brandbekämpfungsvorrichtung mittels eines Schalters (31) erfolgt, der die Versorgung der Anordnung zur Erhöhung des Leerlaufs und der Anordnung zur Steuerung der hydrostatischen Anordnung bewirkt.

3. Kraftübertragungseinrichtung nach Anspruch 1, dadurch gekennzeichnet, daß die Anordnung zur Erhöhung des Leerlaufs aus einem Betätigungsglied (32) besteht, das auf das Gaspedal (33) einwirkt.

4. Kraftübertragungseinrichtung nach Anspruch 1, dadurch gekennzeichnet, daß die Anordnung für die Steuerung des Gleitens des Getriebes (2) ein Steuerpedal (20) aufweist, das einen Verteiler (21) steuert, der auf die Beaufschlagung der Bremse (15) für den ersten und für den zweiten Gang einwirkt.

5. Kraftübertragungseinrichtung nach Anspruch 1, dadurch gekennzeichnet, daß die Steueranordnung aus einer elektronischen Schaltung (30) besteht, der eine Information bezüglich der Drehgeschwindigkeit der Zentrifugalpumpe (22) mittels eines Fühlers (34) zugeführt wird sowie ein Signal für das Steuerteil (35); die elektronische Schaltung (30) erzeugt ein Steuersignal für den Hubraum der Pumpe (23) ausgehend von dem Unterschied zwischen den vom Fühler (34) und vom Steuerteil (35) stammenden Signalen.

6. Kraftübertragungseinrichtung nach Anspruch 1, dadurch gekennzeichnet, daß die Steueranordnung aus einer elektronischen Schaltung (30) besteht, der eine Information bezüglich des Staudruckes der Zentrifugalpumpe (22) mittels eines Fühlers (54) zugeführt wird und ein Signal für das Steuerteil (35); die elektronische Schaltung (30) erzeugt ein Signal für den Hubraum der Pumpe (23) ausgehend vom Unterschied zwischen den vom Fühler (34) und dem Steuerteil (35) stammenden Signalen.

7. Kraftübertragungseinrichtung nach Anspruch 1, dadurch gekennzeichnet, daß die Steueranordnung aus einem Leistungsregler (38) besteht, der in der Stauleitung der Pumpe (36) angeordnet ist und aus einem Elektroverteiler (39) der die Einwirkung des Leistungsreglers (38) auf die Hubraum-Beeinflussungsvorrichtung der Pumpe (36) regelt.

**Claims**

1. A transmission arrangement for a fire-fighting vehicle comprising a wheeled chassis on which is mounted an internal combustion engine (1) driving at least some wheels by way of a semiautomatic or automatic gearbox (2) with a torque converter (10), on which are mounted the cardan-joint transmissions (5 and 7) for driving the wheels, said gearbox (2) having a motion take-off flange member (8), characterised in that said motion take-off flange member (8) drives a hydrostatic device coupled to the centrifugal pump (22) of the fire-fighting equipment and that the arrangement comprises a system for causing an increase in the idle speed of the internal combustion engine (1) to a pre-defined speed, said system being associated with a device for controlling the slip of the gearbox (2), which acts on the brake (15) for the first and second gears, the hydrostatic device comprising a variable-flow pump (23, 26) which supplies a hydraulic motor (25), said hydrostatic device having control means, in such a way that when the fire-fighting equipment is brought into operation control of the speed of forward movement of the vehicle does not affect operation of the centrifugal pump (22).

2. A transmission arrangement according to claim 1 characterised in that the fire-fighting equipment is brought into operation by a switch (31) which permits the feed to the system for causing the increase in the idle speed and the means for controlling the hydrostatic device.

3. A transmission arrangement according to claim 1 characterised in that the system for causing the increase in the idle speed comprises an actuator (32) which acts on the acceleration control lever (33).

4. A transmission arrangement according to claim 1 characterised in that the device for controlling the slip of the gearbox (2) comprises a modulating pedal (20) for controlling a distributor (21) which acts on the feed to the brake (15) of first and second gears.

5. A transmission arrangement according to claim 1 characterised in that the control means comprise an electronic box (30) which receives information in respect of the speed of rotation of the centrifugal pump (22) by way of a pick-up (34) and a signal which is representative of the control member (35); said electronic box (30) will generate an order for correction of the capacity of the pump (23) on the basis of the difference between the signals outputted by the pick-up (34) and the control member (35).

6. A transmission arrangement according to claim 1 characterised in that the control means comprise an electronic box (30) which receives information in respect of the delivery pressure of the electronic pump (22) by way of a pick-up (55) and a signal which is representative of the control member (35); said electronic box (30) will generate an order for correction of the capacity of the pump (23) on the basis of the difference between the signals outputted by the pick-up (54) and the control member (35).

7. A transmission arrangement according to claim 1 characterised in that the control means comprise a flow regulator (31) mounted on the delivery of the pump (36) and an electro-distributor (39) which establishes the action of said flow regulator (38) on the capacity compensator of the pump (36).

FIG.1

FIG.2

EP 0 249 529 B1

FIG.3

FIG.4

FIG.5